# EUROPEAN PATENT APPLICATION

(11) **EP 4 589 880 A1**
(43) Date of publication of application: **23.07.2025**
(21) Application number: 23865423.0
(22) Date of filing: 08.09.2023
(51) Int. Cl.: H04L 9/08, H04L 9/14, G06F 21/44, G06F 21/60

(54) **IOT SYSTEM AND PROGRAM**

(30) Priority: 15.09.2022 JP 2022146914
(71) Applicant: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: FUKUDA, Aki, Kawasaki-shi, Kanagawa 212-0013 (JP)
(74) Representative: HKW Intellectual Property PartG mbB
(86) International application number: PCT/JP2023/032844
(87) International publication number: WO 2024/058068

(57) **Abstract**

A communication device is capable of identifying a user via a security device. An IoT device includes a secure element that performs an encryption process for establishing a secure channel with the communication device. The communication device and the IoT device each store a list indicating first information and second information. The first information is information that is exchangeable when no mutual authentication is performed between the communication device and the IoT device. The second information is information that is exchangeable when the mutual authentication is performed. The communication device acquires the list from the IoT device, and, based on the acquired list, transmits the first information to the IoT device when the mutual authentication is not performed and transmits the second information to the IoT device when the mutual authentication is performed. The IoT device acquires the list from the communication device, and, based on the acquired list, transmits the first information to the communication device when the mutual authentication is not performed and transmits the second information to the communication device when the mutual authentication is performed.

## Description

### FIELD

Embodiments of the present invention relate to an IoT system and a program.

### BACKGROUND

In recent years, an Internet of Things (IoT) system has been used for connecting various devices each having a communication function, via a network such as the Internet to enable data collection, device control, and the like.

### CITATION LIST

### Patent Literature

Patent Literature 1: JP 2018-93456 A
Patent Literature 2: JP 2019-28670 A
Patent Literature 3: JP 2020-523806 A

### SUMMARY OF THE INVENTION

### Problem to be Solved by the Invention

In the IoT system configured as described above, mutual authentication is performed by using a secure element to establish a secure communication path for transmitting and receiving information between devices, in some cases. However, when the mutual authentication is performed in all situations, the mutual authentication is for example required even if information or the like having relatively low confidentiality is transmitted and received, there is a possibility that a degree of freedom of communication between the devices is excessively suppressed, reducing convenience.

Therefore, an object of the embodiments is to provide an IoT system and a program that are configured to improve a degree of freedom of communication between devices without compromising security.

### Means for Solving Problem

An IoT system according to an embodiment includes a communication device and an IoT device. The communication device is capable of identifying a user via a security device. An IoT device includes a secure element that performs an encryption process for establishing a secure channel with the communication device. The communication device and the IoT device each store a list indicating first information and second information. The first information is information that is exchangeable when no mutual authentication is performed between the communication device and the IoT device. The second information is information that is exchangeable when the mutual authentication is performed. The communication device acquires the list from the IoT device, and, based on the acquired list, transmits the first information to the IoT device when the mutual authentication is not performed and transmits the second information to the IoT device when the mutual authentication is performed. The IoT device acquires the list from the communication device, and, based on the acquired list, transmits the first information to the communication device when the mutual authentication is not performed and transmits the second information to the communication device when the mutual authentication is performed.

### BRIEF DESCRIPTION OF DRAWINGS

FIG. 1 is a diagram illustrating an example of a configuration of an IoT system according to an embodiment;
FIG. 2 is a diagram illustrating an example of a functional configuration of a communication device and an IoT device according to the embodiment;
FIG. 3 is a flowchart illustrating an example of an overall process in the IoT system according to the embodiment;
FIG. 4 is a diagram illustrating an example of a data configuration of each of lists according to the embodiment;
FIG. 5 is a sequence diagram illustrating an example of a pre-process in the communication device and the IoT device according to the embodiment;
FIG. 6 is a flowchart illustrating an example of a process in a risk management function according to the embodiment: and
FIG. 7 is a sequence diagram illustrating an example of a process for transfer of first information in the IoT system according to the embodiment.

### DETAILED DESCRIPTION

Embodiments will be described below with reference to the drawings.

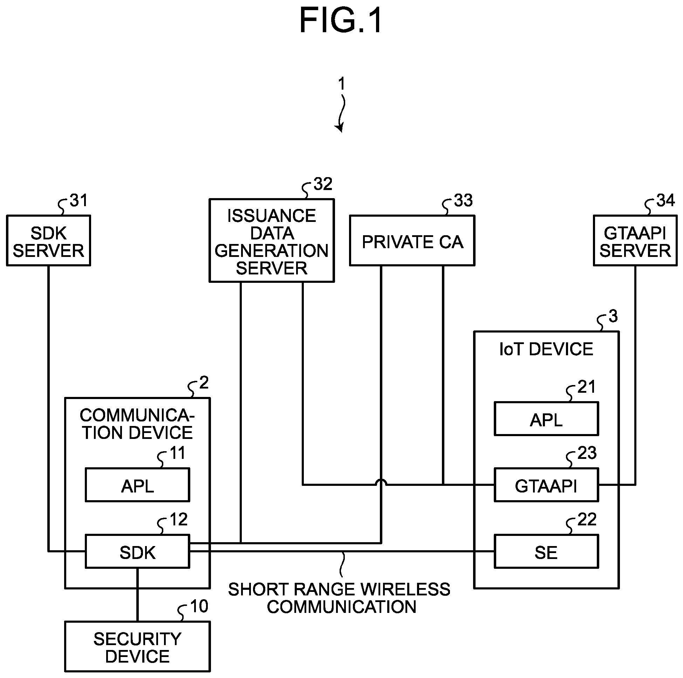

FIG. 1 is a diagram illustrating an example of a configuration of an IoT system 1 according to an embodiment. The IoT system 1 of the present embodiment includes a communication device 2 and an IoT device 3.

The communication device 2 of the present embodiment is an electronic device configured to perform information processing, and can be, for example, a personal computer (PC), a smartphone, or the like. The communication device 2 has a function capable of identifying a user via a predetermined security device 10. The security device 10 is a device holding information by which the user of the communication device 2 can be identified, and the security device 10 may be, for example, an IC card (also referred to as a smart card, a chip card, or the like) or the like.

The communication device 2 of the present embodiment includes an application (APL) 11 and a software development kit (SDK) 12. The APL 11 is software for causing the communication device 2 to implement a predetermined function. The SDK 12 has functions for implementing establishment of data relay between the security device 10 and the APL 11, establishment of a secure channel in communication with another device such as the IoT device 3. The SDK 12 is configured to be communicable with an SDK server 31, an issuance data generation server 32, and a private certificate authority (CA) 33, via a network such as the Internet. The SDK server 31 performs update of the function of the SDK 12, and the like. The issuance data generation server 32 and the private CA 33 perform issuance of a public key, issuance of a public key certificate, verification of an issuer's signature, and the like.

The IoT device 3 of the present embodiment is a device, an apparatus, a sensor, or the like having a predetermined function, and can be, for example, a home appliance, a camera, an automobile, a measuring instrument, or the like. The IoT device 3 is communicable with the communication device 2 via a predetermined network.

The IoT device 3 of the present embodiment includes an APL 21, a secure element (SE) 22, and a generic trust anchor application programming interface (GTAAPI) 23. The APL 21 is software for causing the IoT device 3 to implement a predetermined function. The SE 22 is a device that performs an encryption process, data protection, and the like for establishing the secure channel in communication with another device such as the communication device 2. The GTAAPI 23 has functions for implementing data relay between the SE 22 and the APL 21, establishment of the secure channel in communication with the other device such as the communication device 2, and the like. The GTAAPI 23 is configured to be communicable with a GTAAPI server 34, the issuance data generation server 32, and the private CA 33 via a network such as the Internet. The GTAAPI server 34 updates the function of the GTAAPI 23, and the like.

The communication device 2 and the IoT device 3 of the present embodiment use the functions of the SDK 12 and the GTAAPI 23 to establish short range wireless communication such as Bluetooth (registered trademark), Wi-Fi (registered trademark), and NFC (registered trademark).

Note that, FIG. 1 illustrates an example in which a single communication device 2 and a single IoT device 3 are included in the IoT system 1, but a plurality of communication devices 2 and a plurality of IoT devices 3 may be included.

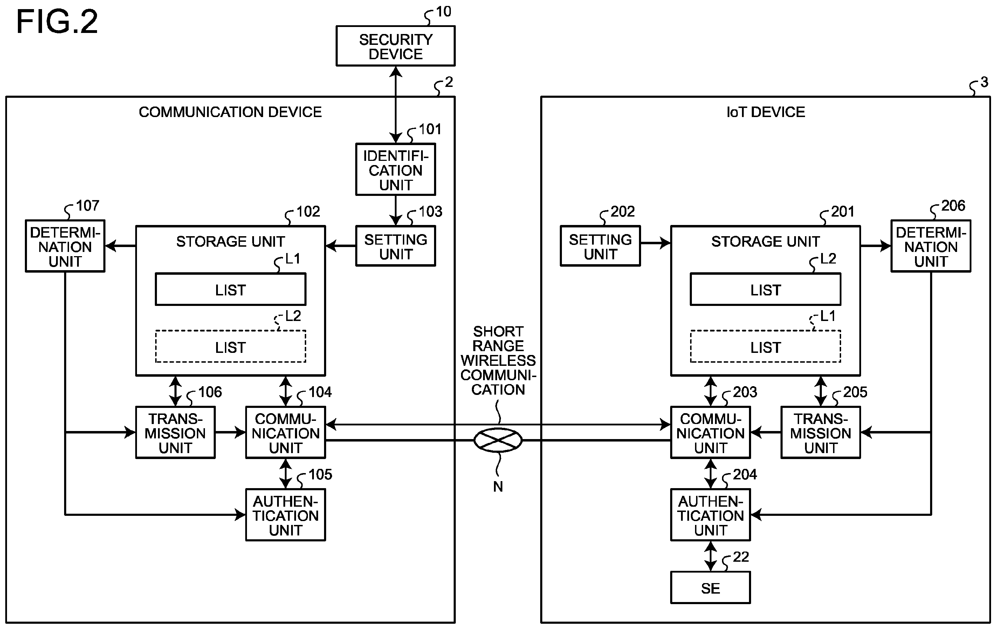

FIG. 2 is a diagram illustrating an example of a functional configuration of the communication device 2 and the IoT device 3 according to an embodiment. The communication device 2 includes an identification unit 101, a storage unit 102, a setting unit 103, a communication unit 104, an authentication unit 105, a transmission unit 106, and a determination unit 107. These functional units 101 to 107 can be configured by cooperation between hardware (CPU, memory, input/output device, communication device, etc.) and software (programs, firmware, etc.) constituting the communication device 2. Note that at least one of the functional units 101 to 107 may be configured by dedicated hardware (circuit or the like).

The identification unit 101 identifies the user of the communication device 2. The identification unit 101 of the present embodiment identifies the user on the basis of identification information acquired from the security device 10 such as the IC card. Note that the method of identifying the user is not limited to this, and the user may be identified by using, for example, biometric authentication, password authentication, or the like. In addition, a process of the biometric authentication, the password authentication, or the like may be performed by the security device 10.

The storage unit 102 stores various data required for implementing the functions of the communication device 2. The storage unit 102 of the present embodiment stores lists L1 and L2. The lists L1 and L2 are each information indicating first information that is exchangeable when no mutual authentication is performed between the communication device 2 and the IoT device 3, and second information that is exchangeable when the mutual authentication is performed. The list L1 is a list corresponding to the communication device 2, and the list L2 is a list corresponding to the IoT device 3. The first information may be, for example, information with relatively low confidentiality. The second information can be, for example, information required for establishing the mutual authentication, more specifically, information about an authentication algorithm, a key used for an encryption process, and the like. The list L1 is stored in advance in the storage unit 102 of the communication device 2. The list L2 is acquired from the IoT device 3 via predetermined short range wireless communication and stored in the storage unit 102. Note that the above-described storage process may be performed by the security device 10.

The setting unit 103 performs setting related to the lists L1 and L2 through operation of the user identified by the identification unit 101. The setting unit 103 enables editing of the contents of the list L1 corresponding to the communication device 2. Moreover, the setting unit 103 enables setting of, for example, whether to permit use of the list L2 acquired from the IoT device 3. In addition, the setting unit 103 enables setting of whether to permit transfer (relaying, distribution, etc.) of the first information indicated by the list L2 acquired from the IoT device 3, to another device other than the communication device 2 and the IoT device 3. Note that the above setting process may be performed by the security device 10.

The communication unit 104 establishes communication between the communication device 2 and another device. The communication unit 104 establishes communication between the communication device 2 and the IoT device 3 via the predetermined short range wireless communication. Moreover, the communication unit 104 establishes communication between the communication device 2 and a predetermined device (e.g., the SDK server 31, the issuance data generation server 32, the private CA 33, etc.) via an appropriate network N such as a wide area network (WAN) or a local area network (LAN).

The authentication unit 105 performs a process for establishing a secure channel in communication by the communication unit 104. Moreover, the authentication unit 105 performs a process for establishing the mutual authentication between the communication device 2 and the IoT device 3. Note that the above processes may be performed by the security device 10.

The transmission unit 106 performs a process for transmitting (transferring) various information stored in the storage unit 102 to another device via a communication path established by the communication unit 104. The other device includes a device other than the IoT device 3, as well as this IoT device 3 that provides the list L2 to the communication device 2.

The determination unit 107 determines, based on a predetermined criterion, whether to perform the mutual authentication between the communication device 2 and the IoT device 3. Moreover, on the basis of the lists L1 and L2 stored in the storage unit 102, the determination unit 107 determines the type of information (first information or second information) to be exchanged with the IoT device 3, and determines whether the first information acquired from the IoT device 3 can be transferred. When the determination unit 107 determines to perform the mutual authentication, the authentication unit 105 performs the process for establishing the mutual authentication with the IoT device 3. The transmission unit 106 exchanges, with the IoT device 3, the type of information (the first information or the second information) determined by the determination unit 107. Moreover, when the transfer of the first information acquired from the IoT device 3 is permitted by the determination unit 107, the transmission unit 106 transfers the first information to another device. Note that the above determination process may be performed by the security device 10.

The IoT device 3 includes a storage unit 201, a setting unit 202, a communication unit 203, an authentication unit 204, a transmission unit 205, and a determination unit 206. These functional units 201 to 206 can be configured by cooperation between hardware (CPU, memory, input/output device, communication device, etc.) and software (programs, firmware, etc.) constituting the IoT device 3. Note that at least one of the functional units 201 to 206 may be configured by dedicated hardware (circuit or the like).

The storage unit 201 stores various data required for implementing the functions of the IoT device 3. The storage unit 201 of the present embodiment stores the lists L1 and L2. Similarly to the lists L1 and L2 stored in the storage unit 102 of the communication device 2, the lists L1 and L2 stored in the storage unit 201 each indicate the first information and the second information. The list L1 corresponds to the communication device 2, and the list L2 corresponds to the IoT device 3. In the IoT device 3, the list L2 is stored in advance in the storage unit 102, and the list L1 is acquired from the communication device 2 via the predetermined short range wireless communication and stored in the storage unit 201. Note that the above storage process may be performed by the SE 22.

The setting unit 202 performs settings related to the lists L1 and L2 through operation of an administrator of the IoT device 3. The setting unit 202 enables editing of the contents of the list L2 corresponding to the IoT device 3. Moreover, the setting unit 203 enables setting of, for example, whether to permit use of the list L1 acquired from the communication device 2. In addition, for example, the setting unit 203 enables setting of whether to permit transfer of the first information indicated by the list L1 acquired from the communication device 2 by the IoT device 3, to another device other than the IoT device 3 and the communication device 2. Note that the above setting process may be performed by the SE 22.

The communication unit 203 establishes communication between the IoT device 3 and the other device. The communication unit 203 establishes communication between the IoT device 3 and the communication device 2 via the predetermined short range wireless communication. Moreover, the communication unit 203 establishes communication between the IoT device 3 and a predetermined device (e.g., the SDK server 31, the issuance data generation server 32, the private CA 33, and the like.) via the appropriate network N such as a wide area network (WAN) or a local area network (LAN).

The authentication unit 204 performs the encryption process for establishing the secure channel in communication by the communication unit 203. Moreover, the authentication unit 204 performs a mutual authentication process for establishing the mutual authentication between the communication device 2 and the IoT device 3. The encryption process and the mutual authentication process in the authentication unit 204 are performed by using an encryption function, a data protection function, and the like of the SE 22.

The transmission unit 205 performs a process for transmitting (transferring) various information stored in the storage unit 201 to the other device via the communication path established by the communication unit 203. The other device includes a device other than the communication device 2, as well as the communication device 2 providing the list L1 to the IoT device 3.

The determination unit 206 determines whether to perform the mutual authentication between the communication device 2 and the IoT device 3 on the basis of the predetermined criterion. Moreover, on the basis of the lists L1 and L2 stored in the storage unit 201, the determination unit 206 determines the type of information to be exchanged with the communication device 2 (first information or second information), whether the first information acquired from the communication device 2 can be transferred, and the like. When the determination unit 206 determines to perform the mutual authentication, the authentication unit 204 performs a process for establishing the mutual authentication with the communication device 2. The transmission unit 205 exchanges the type of information (the first information or the second information) determined by the determination unit 206, with the communication device 2. Moreover, when the transfer of the first information acquired from the communication device 2 is permitted by the determination unit 206, the transmission unit 205 transfers the first information to the other device. Note that the determination process may be performed by the SE 22.

With the configuration as described above, the communication device 2 and the IoT device 3 exchange the lists L1 and L2 each indicating the first information exchangeable when no mutual authentication is performed and the second information exchangeable when the mutual authentication is performed, via the short range wireless communication such as Bluetooth, Wi-Fi, or NFC. Then, on the basis of the list L2 acquired from the IoT device 3, the communication device 2 exchanges the first information with the IoT device 3 when no mutual authentication is performed, and exchanges the second information with the IoT device 3 when the mutual authentication is performed. Similarly, on the basis of the list L1 acquired from the communication device 2, the IoT device 3 exchanges the first information with the communication device 2 when no mutual authentication is performed, and exchanges the second information with the communication device 2 when the mutual authentication is performed. In this way, according to the present embodiment, the communication device 2 and the IoT device 3 are enabled to exchange the first information determined in advance (e.g., information with relatively low confidentiality or the like) without performing the mutual authentication, improving the degree of freedom and convenience of communication in the IoT system 1. In addition, when the mutual authentication is performed, it becomes possible to efficiently perform the process (e.g., encryption process or the like) for establishing the mutual authentication by using the second information.

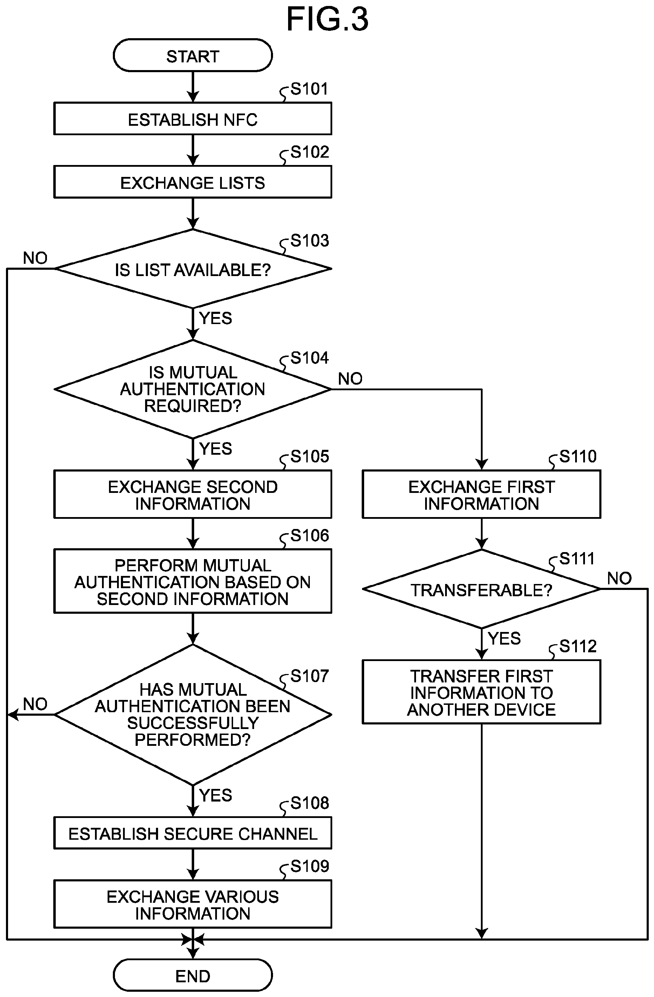

FIG. 3 is a flowchart illustrating an example of an overall process in the IoT system 1 according to an embodiment. When a predetermined condition is satisfied in the IoT system 1, the communication device 2 and the IoT device 3 establish the short range wireless communication such as Bluetooth (S101), and exchange the lists L1 and L2 with each other via the short range wireless communication (S102).

Thereafter, the communication device 2 and the IoT device 3 each determine whether the lists L1 and L2 acquired from the other party are available, respectively (S103). This determination can be performed, for example, on the basis of setting information or the like indicating availability of the lists L1 and L2, included in the lists L1 and L2 acquired from the other party. In other words, the communication device 2 can determine the availability of the list L2, on the basis of the setting information included in the list L2 acquired from the IoT device 3, and the IoT device 3 can determine the availability of the list L1, on the basis of the setting information included in the list L1 acquired from the communication device 2. The availability of the lists L1 and L2 configured as described above is preferably set appropriately by the user of the communication device 2 or the administrator of the IoT device 3.

When the acquired lists L1 and L2 are available (S103: Yes), each of the communication device 2 and the IoT device 3 determines whether the mutual authentication between the communication device 2 and the IoT device 3 is required (S104). A specific method for the determination should not be particularly limited, but for example, the determination may be made on the basis of a function to be performed by the APLs 11 and 21, or may be made on the basis of information or the like included in the lists L1 and L2 acquired from the other party.

When the mutual authentication is required (S104: Yes), the communication device 2 and the IoT device 3 each exchange the second information indicated by the lists L1 and L2 acquired from the other party (S105), and perform the mutual authentication on the basis of the second information received from the other party (S106). At this time, the second information preferably includes information about the authentication algorithm and the key used for the encryption process, and the like, for establishment of the mutual authentication.

Thereafter, each of the communication device 2 and the IoT device 3 determines whether the mutual authentication has been successfully performed (S107). When the mutual authentication has been unsuccessfully performed (S107: No), this routine is finished. When the mutual authentication has been successfully performed (S107: Yes), a predetermined secure channel is established between the communication device 2 and the IoT device 3 (S108), and the communication device 2 and the IoT device 3 exchange predetermined information via the secure channel (S109).

On the other hand, when the mutual authentication is not required (S104: No), each of the communication device 2 and the IoT device 3 exchanges the first information indicated by the lists L1 and L2 acquired from the other party (S110). The first information can be, for example, information with relatively low confidentiality. Thereafter, each of the communication device 2 and the IoT device 3 determines whether the first information acquired from the other party is transferable (S111). The determination can be performed, for example, on the basis of the setting information indicating whether the first information can be transferred, included in each of the lists L1 and L2 acquired from the other party. In other words, the communication device 2 can determine whether the first information acquired from the IoT device 3 can be transferred to the other device, on the basis of the setting information included in the list L2 acquired from the IoT device 3, and the IoT device 3 can determine whether the first information acquired from the communication device 2 can be transferred to the other device, on the basis of the setting information included in the list L1 acquired from the communication device 2. Moreover, the setting information may include information indicating a mode of transfer, for example, the number of devices to which the first information is transferable, a device as a transfer destination, and the like. It is preferable to enable appropriate setting of the necessity and mode of such transfer by the user of the communication device 2 or the administrator of the IoT device 3.

When the first information is untransferable (S111: No), this routine is finished, and when the first information is transferable (S111: Yes), each of the communication device 2 and the IoT device 3 transfers, to another device, the first information acquired from the other party (S112).

With the process as described above, the communication device 2 and the IoT device 3 can exchange and transfer of the first information defined by the lists L1 and L2 without performing the mutual authentication. In addition, it is possible to efficiently perform the process for establishing the mutual authentication by using the second information.

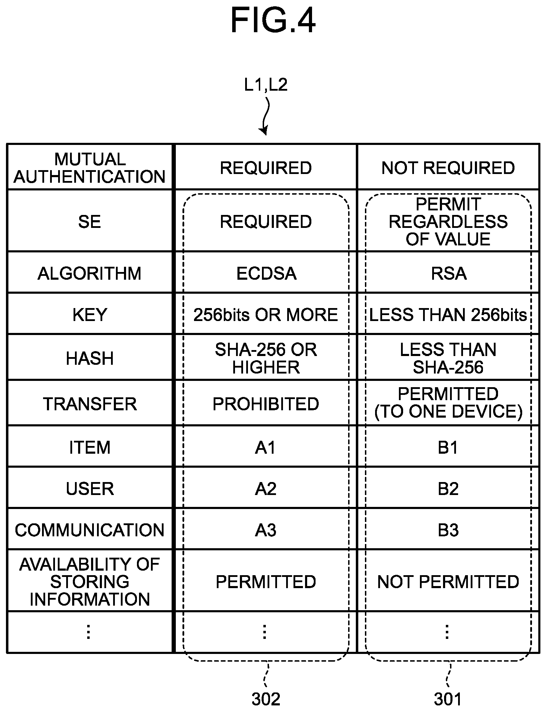

FIG. 4 is a diagram illustrating an example of a data configuration of each of the lists L1 and L2 according to an embodiment. As illustrated in FIG. 4, each of the lists L1 and L2 includes a first information display section 301 and a second information display section 302. The first information display section 301 is a section indicating the first information that is exchangeable when the mutual authentication is not required, and the second information display section 302 is a section indicating the second information that is exchangeable when the mutual authentication is required.

The lists L1 and L2 illustrated here include items of "mutual authentication", "SE", "algorithm", "key", "HASH", "transfer", "item", "user", "communication", "availability of storing information", etc.

The "mutual authentication" indicates necessity of mutual authentication. The "SE" indicates necessity of the secret key that is protected by the SE 22 equipped in the IoT device 3. The "algorithm" indicates the authentication algorithm for performing the mutual authentication. The "key" indicates a key length of a key (public key) used for the mutual authentication. The "HASH" indicates a length of the hash value used for the mutual authentication. The "transfer" indicates whether first information 301 acquired from the other party of the exchange between the lists L1 and L2 is transferable to another device, or indicates the mode of transfer when the first information 301 is transferable (permitted). The "item" indicates information that can be provided to a device as an exchange target. The "user" indicates the user of the communication device 2, the administrator of the IoT device 3, or the like. The "communication" indicates a means for subsequent communication, a means for alternative communication, an alternative protocol, etc. in two-step communication. The "availability of storing information" indicates whether information provided to a device of the other party of the exchange or acquired from the device of the other party of the exchange can be stored in the memory.

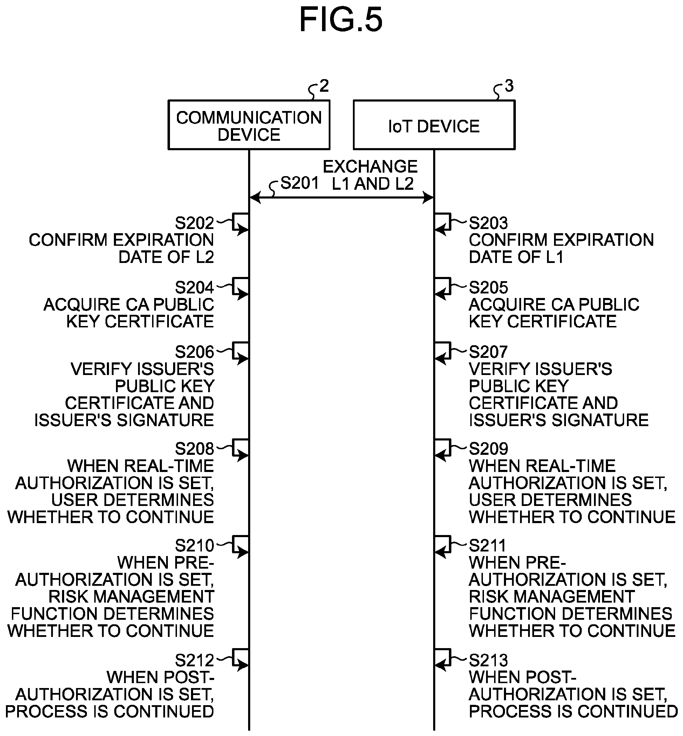

FIG. 5 is a sequence diagram illustrating an example of a pre-process in the communication device 2 and the IoT device 3 according to an embodiment. After the communication device 2 and the IoT device 3 exchange the lists L1 and L2 via the short range wireless communication (S201), the communication device 2 confirms that the list L2 acquired from the IoT device 3 has an appropriate expiration date (S202), and the IoT device 3 confirms that the list L1 acquired from the communication device 2 has an appropriate expiration date (S203).

When the lists L1 and L2 have the appropriate expiration dates, the communication device 2 acquires the public key certificate from the private CA 33 (S204), and the IoT device 3 acquires the public key certificate from the private CA 33 (S205). Moreover, the communication device 2 verifies the public key certificate and the issuer's signature (S206), and the IoT device 3 verifies the public key certificate and the issuer's signature (S207).

When the verifications indicate appropriate results, the communication device 2 and the IoT device 3 change subsequent processing in accordance with a preset type of authorization about use of the lists L1 and L2.

When real-time authorization is preset, the communication device 2 performs processing to cause the user of the communication device 2 to determine whether to continue the process (S208), and the IoT device 3 performs processing to cause the administrator of the IoT device 3 to determine whether to continue the process (S209). When pre-authorization is preset, the communication device 2 determines whether to continue the process by using a risk management function included in the communication device 2 (S210), and the IoT device 3 determines whether to continue the process by using a risk management function included in the IoT device 3 (S211). When post-authorization is preset, the communication device 2 continues the process (S212) and notifies the user of the communication device 2 of a result of the process after the process, and the IoT device 3 continues the process (S213) and notifies the administrator of the IoT device 3 of a result of the process after the process.

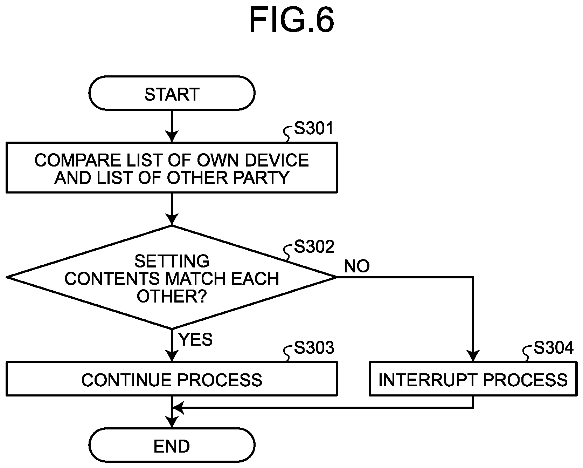

FIG. 6 is a flowchart illustrating an example of a process in the risk management function according to an embodiment. When the pre-authorization is set (Step S210 in FIG. 5), each of the communication device 2 and the IoT device 3 compares the list of the own device (the list L1 stored in advance in the storage unit 102 of the communication device 2 or the list L2 stored in advance in the storage unit 201 of the IoT device 3) with the list of the other party (e.g., the list L2 acquired from the IoT device 3 by the communication device 2 or the list L1 acquired from the communication device 2 by the IoT device 3) (S301). Then, whether the setting contents (e.g., setting of predetermined items in the lists L1 and L2 illustrated in FIG. 4) of both lists (the list of the own device and the list of the other party) match each other is determined (S302).

When the setting contents match each other (S302: Yes), the process using the lists L1 and L2 is continued (S303), and when the setting contents do not match (S302: No), the process using the lists L1 and L2 is interrupted (S304).

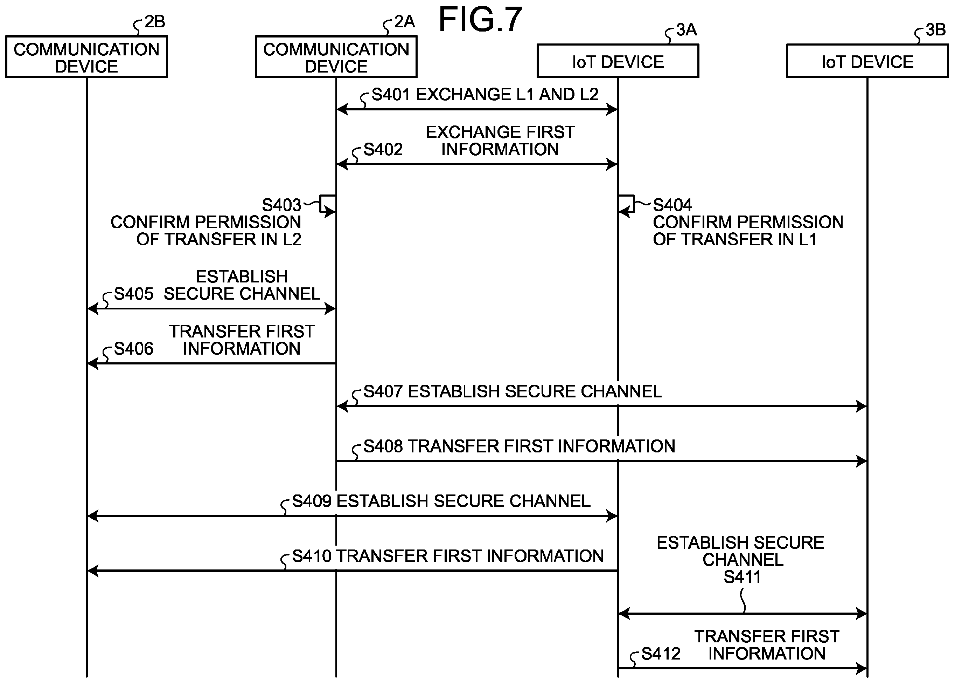

FIG. 7 is a sequence diagram illustrating an example of a process for transfer of the first information 301 in the IoT system 1 according to an embodiment. Here, the IoT system 1 is illustrated that includes two communication devices 2A and 2B and two IoT devices 3A and 3B, and in which mutual authentication is not required.

When the communication device 2A and the IoT device 3A exchange the lists L1 and L2 (S401) and exchange the first information 301 (S402), the communication device 2A confirms that the transfer is permitted in the list L2 acquired from the IoT device 3A (see FIG. 4) (S403), and the IoT device 3A confirms that the transfer is permitted in the list L1 acquired from the communication device 2A (S404).

When the confirmation that the transfer is permitted is obtained, the communication device 2A establishes a predetermined secure channel with the communication device 2B as another device (S405), and transfers the first information 301 acquired from the IoT device 3A, to the communication device 2B (S406). Moreover, the communication device 2A establishes a predetermined secure channel with the IoT device 3B as another device (S407), and transfers the first information 301 acquired from the IoT device 3A, to the IoT device 3B (S408).

Moreover, when the confirmation that the transfer is permitted is obtained, the IoT device 3A establishes a predetermined secure channel with the communication device 2B as the other device (S409), and transfers the first information 301 acquired from the communication device 2A, to the communication device 2B (S410). Moreover, the IoT device 3A establishes a predetermined secure channel with the IoT device 3B as the other device (S411), and transfers the first information 301 acquired from the communication device 2A, to the IoT device 3B (S408).

By the above-described process, the first information 301 that is exchangeable without mutual authentication can be relayed and distributed among multiple devices.

As described above, according to the present embodiment, the lists L1 and L2 each indicating the first information that is exchangeable when no mutual authentication is performed and the second information that is exchangeable when the mutual authentication is performed are exchanged between the communication device 2 and the IoT device 3, and the processes such as information exchange and transfer are performed on the basis of the lists L1 and L2. This configuration makes it possible for the communication device 2 and the IoT device 3 to exchange the first information determined in advance (e.g., information with relatively low confidentiality or the like) without performing the mutual authentication, improving the degree of freedom and convenience of communication in the IoT system 1. In addition, when the mutual authentication is performed, it is possible to efficiently perform the process (e.g., encryption process or the like) for establishing the mutual authentication by using the second information.

A program for implementing the functions of the communication device 2 and the IoT device 3 in the IoT system 1 of the present embodiment may be configured to be provided by being recorded in the form of installable or executable file, on a computer-readable recording medium, such as a CD-ROM, a flexible disk (FD), a CD-R, and a digital versatile disk (DVD). In addition, the program may be configured to be stored on a computer connected to the network such as the Internet and provided by being downloaded via the network. Moreover, the program may be configured to be provided or distributed via the network such as the Internet.

Although the embodiments of the present invention have been described above, the above embodiments are merely examples, and are not intended to limit the scope of the invention. The above embodiments can be implemented in various forms, and various omissions, substitutions, and changes can be made without departing from the gist of the invention. The above embodiments fall within the scope and gist of the invention, and are within the scope of the invention as set forth in the accompanying claims and the equivalents thereof.

### REFERENCE SIGNS LIST

- 1: IoT system
- 2, 2A, 2B: communication device
- 3, 3A, 3B: IoT device
- 10: security device
- 11: APL
- 12: SDK
- 22: secure element (SE)
- 23: GTAAPI
- 31: SDK server
- 32: issuance data generation server
- 33: private CA
- 34: GTAAPI server
- 101: identification unit
- 102: storage unit
- 103: setting unit
- 104: communication unit
- 105: authentication unit
- 106: transmission unit
- 107: determination unit
- 201: storage unit
- 202: setting unit
- 203: communication unit
- 204: authentication unit
- 205: transmission unit
- 206: determination unit
- 301: first information display section
- 302: second information display section
- L1, L2: list
- N: network

## Claims

1. An IoT system comprising:
a communication device capable of identifying a user via a security device; and
an IoT device including a secure element, the secure element performing an encryption process for establishing a secure channel with the communication device, wherein
the communication device and the IoT device each stores a list indicating first information and second information, the first information being exchangeable when no mutual authentication is performed between the communication device and the IoT device, the second information being exchangeable when the mutual authentication is performed,
the communication device is configured to
acquire the list from the IoT device, and,
based on the acquired list, transmit the first information to the IoT device when the mutual authentication is not performed and transmit the second information to the IoT device when the mutual authentication is performed, and
the IoT device is configured to
acquire the list from the communication device, and,
based on the acquired list, transmit the first information to the communication device when the mutual authentication is not performed and transmit the second information to the communication device when the mutual authentication is performed.

2. The IoT system according to claim 1, wherein
the list includes information indicating whether the first information is transferable to another communication device or another IoT device, the other communication device or the other IoT device being different from the communication device and the IoT device between which the lists have been exchanged, and,
when the first information is transferable, the communication device and the loT device between which the lists have been exchanged transfer the first information to the other communication device or the other IoT device.

3. The IoT system according to claim 2, wherein the communication device is configured to enable setting of whether to transfer the first information, the setting being performed through operation of a user who is identified by the security device.

4. The IoT system according to claim 2, wherein the IoT device is configured to enable setting of whether to transfer the first information, the setting being performed through operation of an administrator who is registered in advance in the IoT device.

5. The IoT system according to claim 1, wherein the communication device is configured to enable setting of availability of the list acquired from the IoT device, the setting being performed through operation of a user who is identified by the security device.

6. The IoT system according to claim 1, wherein the IoT device is configured to enable setting of availability of the list acquired from the communication device, the setting being performed through operation of an administrator who is registered in advance in the IoT device.

7. The IoT system according to claim 1, wherein the second information includes information about an authentication algorithm and a key used for performing the mutual authentication.

8. A program causing a communication device to perform processing, the communication device capable of identifying a user via a security device and capable of communicating with an IoT device, the IoT device including a secure element performing an encryption process for establishing a secure channel, the processing comprising:
a process of exchanging, with the IoT device, lists each indicating first information and second information, the first information being exchangeable when no mutual authentication is performed between the communication device and the IoT device, the second information being exchangeable when the mutual authentication is performed; and
a process of, based on the list acquired from the IoT device, transmitting the first information to the IoT device when the mutual authentication is not performed and transmitting the second information to the IoT device when the mutual authentication is performed.
